(19) Europäisches Patentamt / European Patent Office / Office européen des brevets

(11) **EP 3 595 195 B1**

(12) **EUROPEAN PATENT SPECIFICATION**

(45) Date of publication and mention of the grant of the patent:
**12.03.2025 Bulletin 2025/11**

(21) Application number: **18305920.3**

(22) Date of filing: **10.07.2018**

(51) International Patent Classification (IPC):
$H04B\ 10/071$ (2013.01)  $G01M\ 11/08$ (2006.01)

(52) Cooperative Patent Classification (CPC):
**H04B 10/071; G01H 9/004; G01M 11/3118**

(54) **MULTI-RESOLUTION DETECTION OF OPTICAL-FIBER EVENTS**

MEHRAUFLÖSUNGSDETEKTION VON GLASFASEREREIGNISSEN

DÉTECTION MULTI-RÉSOLUTION D'ÉVÉNEMENTS DE FIBRES OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.01.2020 Bulletin 2020/03**

(73) Proprietor: **Nokia Technologies Oy**
**02610 Espoo (FI)**

(72) Inventors:
• **DORIZE, Christian**
**78320 Le Mesnil St Denis (FR)**
• **AWWAD, Elie**
**92290 Châtenay-Malabry (FR)**

(74) Representative: **Bryers Intellectual Property Ltd**
**Bristol & Bath Science Park**
**Dirac Crescent, Emerson's Green**
**Bristol, BS16 7FR (GB)**

(56) References cited:
• XUANWEI MEI ET AL: "Fast coarse-fine locating method for [phi]-OTDR", OPTICS EXPRESS, vol. 26, no. 3, 24 January 2018 (2018-01-24), pages 2659, XP055542636, DOI: 10.1364/OE.26.002659
• YONAS MUANENDA: "Recent Advances in Distributed Acoustic Sensing Based on Phase-Sensitive Optical Time Domain Reflectometry", JOURNAL OF SENSORS, vol. 2018, 13 May 2018 (2018-05-13), US, pages 1 - 16, XP055542638, ISSN: 1687-725X, DOI: 10.1155/2018/3897873
• CHRISTIAN DORIZE ET AL: "Enhancing the performance of coherent OTDR systems with polarization diversity complementary codes", OPTICS EXPRESS, vol. 26, no. 10, 4 May 2018 (2018-05-04), pages 12878, XP055542643, DOI: 10.1364/OE.26.012878

## Description

### BACKGROUND

#### Field of the Invention

Various example embodiments relate to optical equipment such as optical communication equipment and, more particularly but not exclusively, to optical sensing along an optical fiber using distributed acoustic/vibration sensing (DAS/DVS).

#### Description of the Related Art

This section introduces aspects that may help facilitate a better understanding of the invention. Accordingly, the statements of this section are to be read in this light and are not to be understood as admissions about what is prior art or what is not prior art.

In a number of different applications, it is useful to be able to detect time-based mechanical and/or chemical changes along an optical fiber, referred to herein as fiber events. For example, in communications systems having fiber-optic communication links, it may be useful to detect the existence and location of mechanical vibrations in an optical fiber, such as those induced by a train passing nearby the optical fiber. This information may be used to monitor the quality of the optical link (e.g., a vibration may alter the transmission rate) or to monitor any mechanical event independent of the telecom purpose (e.g., for security alerts).

Fast course-fine locating method for [phi]-OTDR, Xuanwei Mei, et al., Optics Express, vol. 26, no. 3, 24 January 2018, p2659, describes a process to localize a mechanical event without monitoring in practice all the fiber segments when sensing a long distance fiber. "Recent Advances in Distributed Acoustic Sensing Based on Phase-Sensitive Optical Time Domain Reflectometry" by Yonas Muanenda, Journal of Sensors 2018, Article ID 3897873, discloses a similar fiber sensing method.

### SUMMARY

Disclosed herein are various embodiments of optical sensing systems that employ multi-resolution optical sensing techniques for detecting and accurately estimating the location of fiber events in optical fibers while reducing the signal processing load to enable such optical sensing systems to be made using practical hardware implementations. In an example embodiment, DAS/DVS sensing can be initially performed over an entire optical fiber at a relatively low resolution to detect a fiber event at an initial detected location. The DAS/DVS sensing can then be repeated one (or more) time(s) at higher (and higher) resolution(s) over shorter (and shorter) portion(s) of the optical fiber located near the previous detected location, e.g., to improve the accuracy of locating the fiber event.

According to an example embodiment, provided is an apparatus comprising an optical transmitter, an optical receiver, and an electronic controller. The optical transmitter is configured to generate and inject a modulated optical signal into an optical fiber having a plurality of optical reflectors distributed along the optical fiber. The optical receiver is configured to receive and process a reflected optical signal corresponding to reflections of the modulated optical signal from the optical reflectors to generate monitoring data corresponding to one or more selected locations along the optical fiber, the one or more selected locations corresponding to one or more of the optical reflectors. The electronic controller is configured to (i) determine the selected locations for the optical receiver and (ii) process the monitoring data to detect at least a first fiber event in the optical fiber at a detected location, wherein the electronic controller is further configured to change the selected locations for the optical receiver in response to at least the first fiber event.

According to another example embodiment, provided is a method comprising providing an apparatus, wherein the apparatus comprises an optical transmitter, an optical receiver, and an electronic controller. The optical transmitter generates and injects a modulated optical signal into an optical fiber having a plurality of optical reflectors distributed along the length of the optical fiber. The optical receiver receives and processes a reflected optical signal corresponding to reflections of the modulated optical signal from the optical reflectors to generate monitoring data corresponding to one or more selected locations along the optical fiber corresponding to one or more optical reflectors. The electronic controller that (i) determines the selected locations for the optical receiver and (ii) processes the monitoring data to detect at least one fiber event in the optical fiber at a detected location.

### BRIEF DESCRIPTION OF THE DRAWINGS

Embodiments of the invention will become more fully apparent from the following detailed description, the appended claims, and the accompanying drawings in which like reference numerals identify similar or identical elements.

FIG. 1 is a block diagram of an optical sensing system according to an embodiment;

FIG. 2 is a graph showing the superposition of successive captures of Rayleigh intensity data using the system of FIG. 1 according to an embodiment;

FIG. 3 is a graph showing the time-averaged values for the Rayleigh intensity data of FIG. 2 (solid curve) and the inverse standard deviation of the phase data for the same captures (dashed curve);

FIG. 4 is a flow diagram of the processing of the controller and the digital processor of FIG. 1 according to an embodiment;

FIGs. 5A-5D present a number of graphs that demonstrate the multi-resolution characteristic of the fiber-event localization processing of the system of FIG. 1 according to an embodiment; and

FIG. 6 is a block diagram of a portion of a communications network according to an embodiment.

DETAILED DESCRIPTION

Detailed illustrative embodiments of the present invention are disclosed herein. However, specific structural and functional details disclosed herein are merely representative for purposes of describing example embodiments of the present invention. The present invention may be embodied in many alternate forms and should not be construed as limited to only the embodiments set forth herein. Further, the terminology used herein is for the purpose of describing particular embodiments only and is not intended to be limiting of example embodiments of the invention.

As used herein, the singular forms "a," "an," and "the," are intended to include the plural forms as well, unless the context clearly indicates otherwise. It further will be understood that the terms "comprises," "comprising," "includes," and/or "including," specify the presence of stated features, steps, or components, but do not preclude the presence or addition of one or more other features, steps, or components. It also should be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

At least some embodiments disclosed herein may benefit from the use of at least some features disclosed in C. Dorize and E. Awwad, "Enhancing the performance of coherent OTDR systems with polarization diversity complementary codes," Optics Express, 26(10), 12878-12890 (2018) ("the Optics Express paper"), In particular, some embodiments may benefit from the use of the DAS/DVS technique(s) disclosed therein. An example DAS/DVS technique enables detection of fiber events along an optical fiber using distributed acoustic/vibration sensing based on optical phase sensing of Rayleigh backscattering in which the reflections of complementary data sequences transmitted along the optical fiber are analyzed to detect temporal changes in the characteristics of different locations along the optical fiber.

Unfortunately, for some applications of DAS/DVS techniques that involve monitoring relatively long optical fibers, the corresponding signal processing load involved in continuously analyzing the data for all of the Rayleigh backscattering locations may be too high for practical hardware implementations. This and possibly some related problems in the state of the art can advantageously be addressed using at least some embodiments disclosed herein.

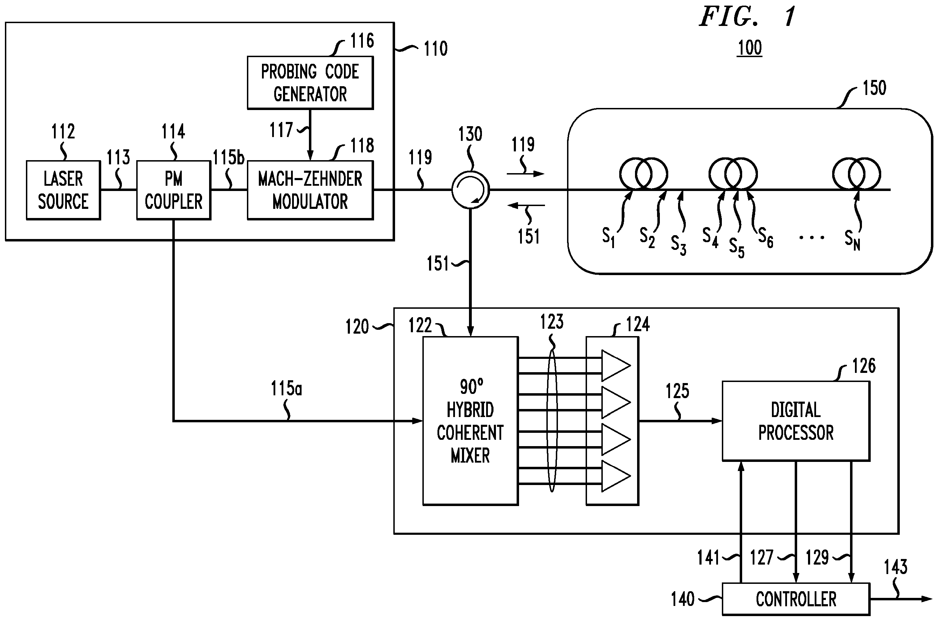

FIG. 1 is a block diagram of an optical sensing system 100 according to an embodiment. System 100 comprises an optical transmitter 110, an optical receiver 120, an optical circulator 130, and an electronic controller 140. The optical sensing system 100 is designed and configured to detect and determine the location of fiber events along the length of an optical fiber 150. As indicated in FIG. 1, the optical fiber 150 has a number (N) of Rayleigh backscatterers $S_n$ distributed along its length, where the Rayleigh backscatterers $S_1$, $S_2$, ..., $S_N$ are intrinsic features formed during the fabrication of a doped optical fiber. As described previously, the term "fiber event" is used to refer to a mechanical and/or chemical change at a location along the length of the optical fiber 150 that results in a significant change in the phases of the signals reflected by one or more Rayleigh backscatterers located downstream of the fiber event.

As used herein, the term "upstream" refers to locations along the optical fiber 150 that are closer to the optical transmitter 110, while the term "downstream" refers to locations along the optical fiber 150 that are farther from the optical transmitter 110. Thus, in FIG. 1, backscatterers $S_1$ and $S_2$ are upstream of backscatterer $S_3$, and backscatterers $S_4$ and $S_5$ are downstream of backscatterer $S_3$.

In the particular implementation of FIG. 1, the optical transmitter 110 comprises a high coherence laser source 112, a polarization-maintaining (PM) coupler 114, a code generator 116, and a Mach-Zehnder (MZ) modulator 118. The PM coupler 114 taps off a portion 115a of the polarized laser signal 113 generated by the laser source 112 and forwards that portion 115a to the optical receiver 120. The MZ modulator 118 modulates the remainder 115b of the laser signal based on a binary code sequence 117 generated by the code generator 116 to generate a modulated optical signal 119. In one possible implementation, the binary code sequence 117 contains quadrature-phase shift-keying (QPSK) I and Q codes that get modulated onto the horizontal and vertical polarization components of the polarized laser signal 115b. Those skilled in the art will understand that other coding schemes may be employed, including bi-phase shift keying (BPSK).

The optical transmitter 110 injects the modulated optical signal 119 into the optical fiber 150 via the optical circulator 130, where the modulated optical signal 119 gets partially reflected by each Rayleigh backscatterer back towards the optical transmitter 110. The resulting optical signal 151 received by the optical circulator 130 from the optical fiber 150 is the superposition of all of the different reflected signals from the different Rayleigh backscatterers shifted in time (e.g., phase) relative to one another based on the round-trip transmission time from the optical circulator 130 to the particular backscatterer and then back to the optical circulator 130. The combined reflected optical signal 151 is forwarded by the optical circulator 130 to the optical receiver 120, which processes the optical signal 151 to characterize the various reflected signals from one or more backscatterers at specified locations along the optical fiber 150, where the location $d$ of each backscatterer is associated with and can be identified by a unique round-trip transmission time based on its distance along the optical fiber 150.

The optical receiver 120 of FIG. 1 is a dual-polarization coherent receiver that comprises a 90-degree hybrid coherent mixer based on two single-polarization 90-degree hybrids 122, an optical-to-electrical (O-to-E) converter 124, and a digital processor 126. The mixer 122 mixes the optical signal 151 received from the optical circulator 130 with the polarized laser signal 115a received from the PM coupler 114 to generate eight different optical components 123 corresponding to the in-phase and in-quadrature beating signals between the horizontal and vertical polarization components of the polarized laser signal 115a and the horizontal and vertical polarization components of the modulated optical signal 151. The O-to-E converter 124 converts those eight optical components 123 into four digital electrical signals 125 that get processed by the digital processor 126. In one implementation, the O-to-E converter 124 comprises (i) four balanced photodetector pairs configured to convert the eight optical components 123 into four analog electrical signals, (ii) four trans-impedance amplifiers (TIAs) configured to amplify the four analog electrical signals, and (iii) four analog-to-digital converters (ADCs) configured to generate the four digital signals 125 from the amplified analog electrical signals.

In one implementation, the modulated optical signal 119 carries a single pulse that gets injected into the optical fiber 150, and the optical signal 151 is the superposition of the reflections of that single pulse from the different backscatterers. The pulse can be periodically repeated, as long as the time between consecutive pulses is longer than the maximum round-trip transmission time from the optical circulator 130 to the last backscatterer and back, so that the reflections from different pulses do not overlap.

In another implementation, the modulated optical signal 119 is generated by modulating the laser signal 115b with an appropriate multi-bit binary code 117. Here, too, the modulated optical signal 119 can be periodically repeated, as long as reflections corresponding to different transmissions of the multi-bit binary code 117 do not overlap. One way to prevent such overlap is to ensure that the employed binary code is at least as long as the maximum round-trip transmission time. In that case, the modulated optical signal 119 can be transmitted continuously.

Those skilled in the art will understand that other suitable probing techniques for detecting the existence and location of fiber events may be employed in other implementations, like those employing series of binary or non-binary pulses or optical chirps.

The digital processor 126 can be instructed by the controller 140 via a control signal 141 to operate in one of two different modes of operation: (i) intensity mode in which the digital processor 126 generates intensity data 127 for a set of selected locations along the optical fiber 150 specified by the controller 140 using control signal 141 and (ii) phase mode in which the digital processor 126 generates differential phase data 129 for a set of selected locations along the optical fiber 150 specified by the controller 140 using control signal 141. In an example embodiment, the control signal 141 can be configured to identify distance index values representative of the round-trip transmission times for the selected locations.

In both modes of operation, the digital processor 126 determines the channel response of the optical fiber 150 by performing correlations between the digital signals 125 and the binary code sequence(s) 117 and then generates Jones matrices for the set of selected locations using corresponding data points of the channel response. Assuming that the optical fiber 150 has been probed jointly on both polarization axes by means of complementary binary code sequences 117, the digital processor 126 is configured to generate 2x2 Jones matrices $H_{t,d}$ at time index $t$ and distance index $d$ from the four digital signals 125, e.g., using some of the procedures disclosed in the Optics Express paper. Note that the distance index $d$ is used to represent a selected location along the optical fiber 150.

**When** instructed by the controller 140 to operate in the intensity mode, the digital processor 126 generates an intensity value 127 as *Trace(H.H\*)* for each selected location, where *Trace* refers to the sum of the elements on the diagonal of a matrix, $H^*$ stands for the conjugate transpose of the 2x2 Jones matrix $H$ (subscripts $t$ and $d$ are dropped to simplify the notation), and *(H.H\*)* represents the matrix product of the two matrices.

Note that, in certain implementations, the digital processor 126 and the controller 140 can both be implemented on a single signal-processing device. For purposes of this discussion, the digital processor 126 and the controller 140 are depicted and described as being two separate processing elements because of their different functions.

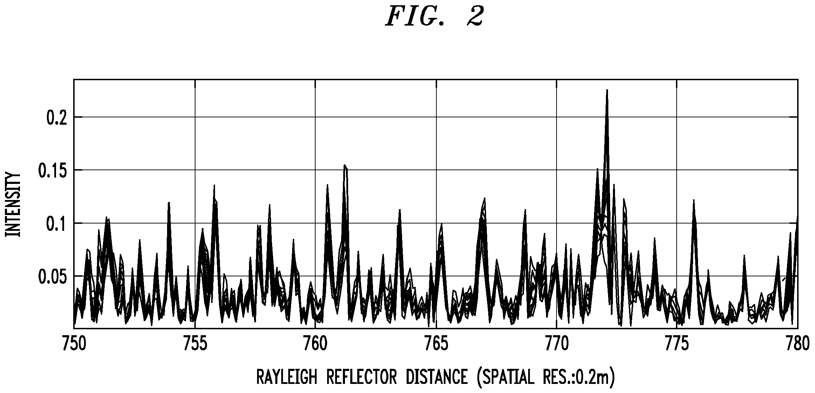

FIG. 2 is a graph showing the superposition of 20 successive captures of Rayleigh intensity data 127 over a 60-second time interval between location 750m and location 780m along a 1500m long optical fiber at a spatial resolution of 20cm. FIG. 2 demonstrates the stability of the Rayleigh intensity data over that time interval.

When instructed by the controller 140 to operate in the phase mode, the digital processor 126 derives absolute phase values $\Psi_{t,d}$ from the Jones matrices

$H_{t,d}$ by calculating $\Psi_{t,d}=(1/2).arg(det(H))$, where *det* stands for the determinant of matrix $H$ and *arg* stands for the angle, expressed in radians, of the complex value *det(H)*. The absolute phase value $\Psi_{t,d}$ for a selected location $d$ represents the offset at time $t$ between signal reflected from that selected location and received at the optical receiver 120 and the multi-bit binary code(s) 117 used to generate the modulated optical signal 119.

The digital processor 126 generates differential (over distance) phase values $\varphi_{t,d}$ (129, FIG. 1) by calculating $\varphi_{t,d} = (\Psi_{t,d} - \Psi_{t,d-1})$, where each differential phase value $\varphi_{t,d}$ represents the difference between the absolute phase value $\Psi_{t,d}$ for the selected location $d$ and the absolute phase value $\Psi_{t,d-1}$ for the previous selected location $d-1$. As used herein, the term "previous selected location" refers to the selected location that is immediately upstream from the selected location $d$. For the first selected location (i.e., the selected location closest to the optical circulator 130), the absolute phase value $\Psi_{t,d}$ for that location may be used as a reference to extract the differential phases $\varphi_{t,d}$ of the downstream selected locations.

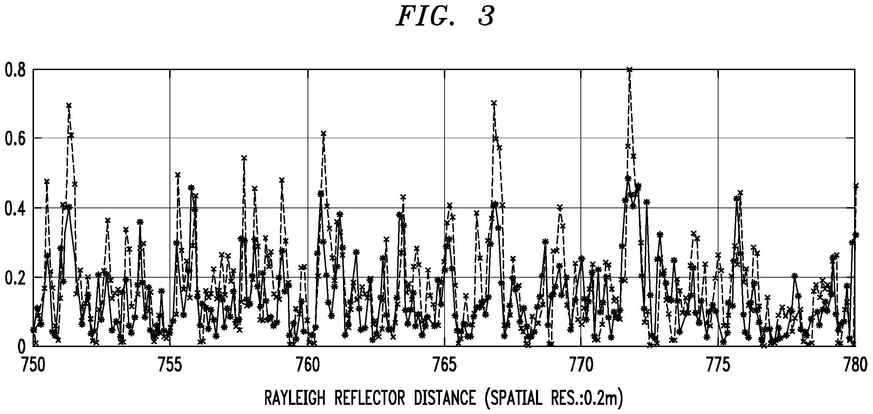

FIG. 3 is a graph showing the time-averaged values for the Rayleigh intensity data 127 of FIG. 2 (solid curve) and the inverse standard deviation of the differential phase data 129 for the same 20 captures (dashed curve) at a spatial resolution of 20cm. The fact that peaks in the average intensity data typically correspond to peaks in the inverse standard deviation for the differential phase data indicates that locations with relatively high intensity levels have relatively stable phase values, which implies that those locations are suitable for being used in the monitoring of the optical fiber 150 for fiber events.

For a static optical fiber (i.e., an optical fiber having no fiber events), the differential phase data 129 will be relatively constant over time at every selected location. When a fiber event occurs at a particular location along the optical fiber 150, the differential phase value 129 at the next selected location downstream from the location of the fiber event will vary over time. For example, when the fiber event corresponds to a localized vibration at a particular location along the length of the optical fiber 150 that results in the length of the optical fiber slightly varying over time in an oscillating pattern, the absolute phase values of the signals reflected from the Rayleigh backscatterers that are located downstream of that fiber event will also vary over time in corresponding oscillating patterns, while the absolute phase values of the signals reflected from the Rayleigh backscatterers that are located upstream of the fiber event will remain relatively constant over time. Since the optical receiver 120 generates differential phase data 129 corresponding to the difference in absolute phase values between consecutive selected locations, the differential phase data 129 for the selected location immediately downstream of the fiber event will be the only differential phase data 129 that will vary significantly over time. The differential phase data 129 for all other selected locations upstream and downstream of that immediately downstream selected location will be relatively constant over time.

By monitoring the differential phase data 129 for a number of specified locations along the optical fiber 150 over multiple transmissions of the modulated optical signal 119, when a fiber event eventually occurs at some location along the optical fiber, the controller 140 can detect that fiber event based on the temporal changes in the differential phase data 129 for the selected location immediately downstream of the fiber event (referred to as the "detected location"). If the differential phase data 129 at a particular location indicate the existence of a fiber event, then the controller 140 can conclude that the fiber event has occurred at or immediately upstream of that detected location.

For example, assuming that the locations of backscatterers $S_3$ and $S_4$ in FIG. 1 are two consecutive locations selected by the controller 140 for monitoring, if the controller 140 detects the existence of a fiber event in the differential phase data 129 for the reflected signal corresponding to the location of backscatterer $S_4$, then the controller 140 can conclude that the fiber event occurred at a location that is somewhere (i) downstream of backscatterer $S_3$ and (ii) at or upstream of backscatterer $S_4$.

In one possible implementation, the controller 140 can be configured to conclude that a fiber event has occurred when the variance of the differential phase data 129 for a selected location over a specified duration exceeds a specified variance threshold level. Other implementations may apply other criteria for detecting fiber events, including but not limited to thresholding the magnitude of the change in differential phase data 129 over a specified duration. A possible alternative criterion would be to search for a significant value or a significant change in the value in the power spectral density of the differential phase data 129, for example, the occurrence of a spectral peak.

In order to monitor the optical fiber 150 for fiber events over its entire length, the controller 140 can, in theory, instruct the digital processor 126 to generate differential phase data 129 for each different location from the first backscatterer $S_1$ until the last backscatterer $S_N$. Assuming that the controller 140 saves the differential phase data 129 for all $N$ backscatterers and for a number of different transmissions of the modulated optical signal 119, the controller 140 can characterize changes in the differential phase data 129 over time for each of the $N$ locations along the optical fiber 150 and detect one or more fiber events based on temporal changes in that differential phase data 129.

In an application of the optical sensing system 100 of FIG. 1 involving an optical fiber 150 having a large number $N$ of backscatterers $S_n$, such as $N=10^5$ backscatterers $S_n$ in a 100km optical fiber, conventional signal processing devices might not be able to handle the processing loads required for the digital processor 126 and the controller 140 to continuously monitor all $N$ locations. To address this problem, according to certain embodiments, the controller 140 is configured to support a multi-resolution optical sensing technique in which the controller 140 can modify the set of selected locations for which the digital processor 126 is to generate differential phase data 129, where different sets of selected locations can have different spatial resolution levels. Note that, in general, higher average spatial resolution levels have shorter average distances between adjacent selected locations.

In one example implementation, the controller 140 instructs the digital processor 126 to determine differential phase data 129 for only a specified initial subset of the $N$ locations corresponding to the backscatterers until a fiber event is detected at one of those selected locations, where the specified subset spans the entire optical fiber 150, but at a lower average spatial resolution than the maximum spatial resolution corresponding to all $N$ backscatterers.

If and when the controller 140 detects a fiber event at one of the selected locations in the initial subset (i.e., the detected location), the controller 140 updates the subset of selected locations for which subsequent differential phase data 129 are generated, where the updated subset of locations includes a number of newly added locations upstream of the detected location (and downstream of the previous selected location), where the average spatial resolution corresponding to the newly added locations is higher than the average spatial resolution of the selected locations in the initial subset. As such, the controller 140 can then improve the accuracy with which the location of the fiber event is determined by processing the subsequent differential phase data 129 corresponding to the updated subset.

Because the digital processor 126 and the controller 140 do not have to continuously monitor all $N$ locations, if the average spatial resolution of the initial subset of selected locations is sufficiently low, then the digital processor 126 and the controller 140 can be implemented using conventional signal processing devices. In this way, the optical sensing system 100 of FIG. 1 can efficiently detect and determine the location of a fiber event with sufficient accuracy using conventional digital-signal-processor technology. Note that fiber events, such as those associated with vibrations in the optical fiber 150, have durations sufficiently long to be captured and analyzed using such a multi-resolution optical sensing technique.

In some implementations, the controller 140 and the digital processor 126 are configured to handle multiple concurrent fiber events. For example, after detecting a first fiber event by monitoring the entire fiber length with an initial subset of selected locations having a low average spatial resolution, the controller 140 will update the subset to include all of the original selected locations plus a number of new locations located just upstream of the detected location for the first fiber event and having a higher average spatial resolution. In this way, the controller 140 can improve the accuracy of locating the first fiber event using the newly added locations having a higher average spatial resolution, while continuing to scan the rest of the optical fiber 150 at the original, lower average spatial resolution. If and when the controller 140 detects one or more other fiber events elsewhere along the optical fiber 150, the controller can add appropriate additional locations at a higher average spatial resolution to the subset of selected locations. Similarly, after the controller 140 has completed the determination of the location of a previously detected fiber event, the controller 140 can again update the subset of selected locations by eliminating the previously added, higher-resolution locations, while retaining the original, low-resolution locations of the initial subset.

Note that, in some implementations, the controller 140 can increase the average spatial resolution of different ranges of selected locations in two or more stages of processing as the controller 140 continues to improve the accuracy of locating a given fiber event up to the maximum spatial resolution of all $N$ backscatterers $S_n$. For example, for a 100km optical fiber 150 having $10^5$ backscatterers $S_i$ having a maximum average spatial resolution of 1m, the controller 140 could select an initial subset of only 1000 locations spanning the entire optical fiber 150 with an average spatial resolution of 100m. When a fiber event is detected at a detected location, the controller 140 could then update the subset of selected locations by adding, for example, nine new locations having an average spatial resolution of 10m immediately upstream of the detected location. The controller 140 would then be able to improve the location of the detected fiber event by detecting time-varying differential phase data 129 at one of the nine newly added locations or at the previous detected location. The controller 140 could then update the subset of selected locations one more time by adding, for example, another nine new locations having the maximum average spatial resolution of 1m immediately upstream of the improved detected location in order to further improve the accuracy of locating the fiber event. Note that, when the controller 140 adds the latter group of nine new locations at the 1m average spatial resolution level to the subset of selected locations, the controller 140 can also remove some or all the previously added locations at the 10m average spatial resolution level, e.g., because those locations may not be needed for further improving the accuracy of locating the fiber event.

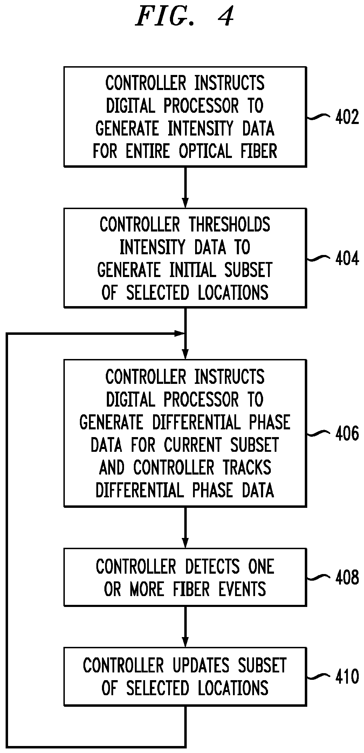

FIG. 4 is a flow diagram of the processing performed by the controller 140 and the digital processor 126 of FIG. 1, according to an embodiment. Note that, during the processing of FIG. 4, the optical transmitter 110 continuously or periodically injects the modulated optical signal 119 into the optical fiber 150, and the optical receiver 120 processes the corresponding reflected optical signals 151 to provide the digital signals 125 to the digital processor 126. In this particular embodiment, neither the digital processor 126 nor the controller 140 has *a priori* knowledge of the number and location of Rayleigh backscatterers $S_n$ in the optical fiber 150.

At step 402, using the control signal 141, the controller 140 instructs the digital processor 126 to generate intensity data 127 corresponding to the entire length of the optical fiber 150 at a sufficiently high spatial resolution level. In response, at step 404, the digital processor 126 generates multiple intensity values 127 at different times for each location along the optical fiber 150 at that high spatial resolution level. At step 406, the controller 140 generates and saves an average intensity value for each of the different locations along the optical fiber 150.

As indicated in FIGs. 2 and 3, when plotted as a function of distance along the optical fiber 150, peaks and other relatively high values in the average intensity data will correspond to the locations of Rayleigh backscatterers $S_n$. In certain implementations, the controller 140 can generate and update the subset of selected locations used for monitoring the optical fiber 150 by thresholding the average intensity data using appropriate different intensity-threshold levels.

At step 408, the controller 140 generates an initial subset of selected locations having a relatively low spatial resolution level by thresholding the average intensity data using an appropriate first intensity threshold level. The controller 140 selects each location having an average intensity value greater than the first intensity threshold level to be in the initial subset. Note that the controller 140 may need to adaptively modify the first intensity threshold level in order to generate an initial subset having a target number of selected locations over the length of the optical fiber 150 in order to achieve a desired, relatively low average spatial resolution resulting from the use of the selected locations of the initial subset. If the number of selected locations is too small (large), then the controller 140 is configured to decrease (increase) the first intensity threshold level.

At step 410, the controller 140 uses control signal 141 to instruct the digital processor 126 to generate differential phase data 129 for the initial subset of selected locations. At step 412, the digital processor 126 generates differential phase data 129 for the initial subset of selected locations. At step 414, the controller 140 tracks the differential phase data 129 for each selected location in the initial subset. For example, for each selected location, the controller 140 can generate a variance or standard deviation metric that characterizes the variance or standard deviation of the differential phase data 129 over time for that selected location. A standard deviation (over time) metric of the differential phase value $\varphi$ at fiber segment location index d can be determined by calculating $\sqrt{V_t(\varphi_{t,d})}$, where $V_t$ stands for the variance over the time axis. A person of ordinary skill in the art will understand that alternative suitable metrics for fiber-event detection are possible as well.

At step 416, the controller 140 determines whether one or more fiber events have been detected, for example, when the differential-phase standard deviation metric for one or more of the selected locations exceeds a specified standard-deviation threshold level. If the controller 140 does not detect one or more fiber events using the current set of differential phase data 129, then processing returns to step 412, where the digital processor 126 generates another set of differential phase data 129 using the same subset of selected locations for the controller 140 to track at step 414.

If, however, the controller 140 detects at step 416 one or more fiber events, then processing continues to step 418, where the controller 140 can update the subset of selected locations and instruct the digital processor 126 to use the updated subset of selected locations. In general, the accuracy of locating a detected fiber event is a function of the distance between the detected location for the fiber event and the previous selected location. The shorter the distance, the higher the accuracy.

For each fiber event detected at step 416, if the controller 140 determines that the accuracy of locating the fiber event is not sufficient (e.g., because the distance between the detected location and the previous selected location is greater than a specified distance threshold), then, at step 418, the controller 140 can select a number of new locations between the detected location and the previous selected location to add to the subset of selected locations. In one implementation, the controller 140 can apply a lower intensity threshold level to the stored average intensity data between the detected location and the previous selected location in order to identify the new locations to add to the existing subset of selected locations. Note that the average spatial resolution for the newly selected locations will be higher than the spatial resolution corresponding to the detected location and the previous selected location. Here, too, the controller 140 may need to adaptively adjust the lower intensity threshold level in order to achieve a target number of additional locations or a target higher average spatial resolution. This process of selecting higher and higher average spatial resolution levels using lower and lower intensity threshold levels can be continued until a desired spatial resolution level (or the maximum available spatial resolution level) is reached.

Note that, when the controller 140 updates the subset of selected locations for a particular detected fiber event for the second or any additional time, the controller 140 can delete, from the subset of selected locations, those previously added locations for that fiber event that are no longer needed for improving the accuracy of locating the fiber event.

For each fiber event detected at step 416, if the controller 140 determines that the accuracy of locating the fiber event is sufficient, then the controller 140 can output the corresponding detected location as the final detected location 143 (FIG. 1) for that fiber event. In that case, at step 418, the controller 140 can update the subset of selected locations by deleting any locations that were previously added to the subset during previous executions of step 418 (i.e., locations that were not part of the initial subset of step 408).

Note that the updated subset includes all of the selected locations in the initial subset having the initial relatively low average spatial resolution and corresponding to the entire length of the optical fiber 150 plus any additional selected locations added at step 418 having a higher average spatial resolution and corresponding to a relatively small portion of the optical fiber 150 immediately upstream of the detected location for each detected fiber event. In this way, the controller 140 can efficiently handle multiple detected fiber events independently and in parallel by increasing, as needed, the spatial resolution of the selected locations for those detected fiber events, while continuing to monitor the entire optical fiber 150 for new fiber events at the initial, lower spatial resolution level.

Note that, for applications in which the intensity data is not sufficiently static over relatively long periods of time, steps 402-408 may need to be repeated periodically to generate (i) new intensity data 127 for the entire length of the optical fiber 150 and (ii) a corresponding new initial subset of selected locations.

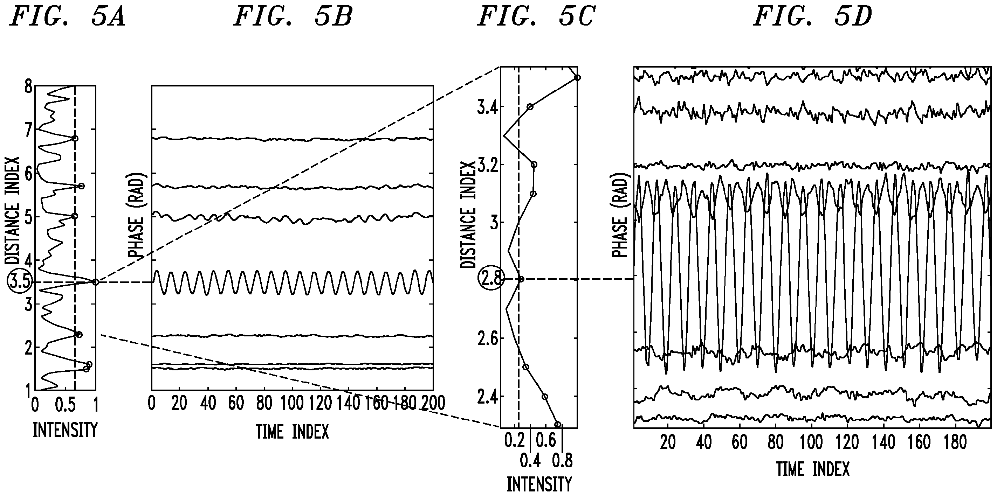

FIGs. 5A-5D present a number of graphs that demonstrate the multi-resolution characteristic of the fiber-event localization processing of the controller 140 and the digital processor 126 of FIG. 1.

FIG. 5A presents a plot of the averaged intensity data 127 over a particular portion of the optical fiber 150, where the vertical axis represents location along the optical fiber using an arbitrary distance index ranging from 1 to 8, and the horizontal axis represents the average intensity values using a normalized intensity scale from 0 to 1 at those different locations. In FIG. 5A, the average intensity values are depicted as being thresholded by the controller 140 at an intensity level of about 0.65 to generate an initial subset of selected locations having average intensity values greater than 0.65. In this example, the seven selected locations are at distance index values of about 1.4, 1.5, 2.3, 3.5, 5.0, 5.7, and 6.8.

FIG. 5B presents plots of the differential phase data 129 for these seven selected locations as a function of time, where the horizontal axis is time using an arbitrary time index ranging from 0 to 200, and the vertical axis shows the differential phase values 129 for each of the seven selected locations. Note that the differential phase plots are depicted in FIG. 5B vertically offset from one another to coincide with the corresponding selected locations in FIG. 5A. As shown in FIG. 5B, the differential phase plot corresponding to location index 3.5 has a temporal variance that is much greater than the temporal variances of the six other selected locations. Assuming that the temporal variance at location index 3.5 exceeds the specified first variance threshold level, the controller 140 will detect a fiber event at that selected location. Because the fiber event is detected at location index 3.5 and because the next upstream location is at location index 2.3, it is known that the fiber event occurred at a location that is both (i) downstream of location index 2.3 and (ii) at or upstream of location index 3.5.

FIG. 5C presents a plot of the average intensity data from distance index 2.3 to distance index 3.5. This is the same average intensity data 127 shown in FIG. 5A for that same location range, but, in FIG. 5C, the average intensity data 127 is depicted as being thresholded by the controller 140 at a lower, second average intensity threshold level of about 0.25 in order for the controller 140 to select additional locations to add to the existing subset of selected locations. In this case, six new locations at distance index values of about 2.4, 2.55, 2.8, 3.1, 3.2 and 3.4 are added to the subset. Note that the average spatial resolution of the six new locations is greater than the average spatial resolution of the initial subset of selected locations.

FIG. 5D presents plots of the differential phase data 129 for seven selected locations as a function of time that is analogous to the plots of FIG. 5B, where the seven selected locations are the six newly added locations from FIG. 5C plus the original location at distance index value 3.5. Note that the original location at distance index value 2.3 is not included in FIG. 5D, because the detected fiber event is known to have occurred downstream of that location. As shown in FIG. 5D, the differential phase data at distance index 2.8 now indicates the existence of the fiber event, implying that the actual location of the fiber event is downstream of distance index 2.55 and at or upstream of distance index 2.8.

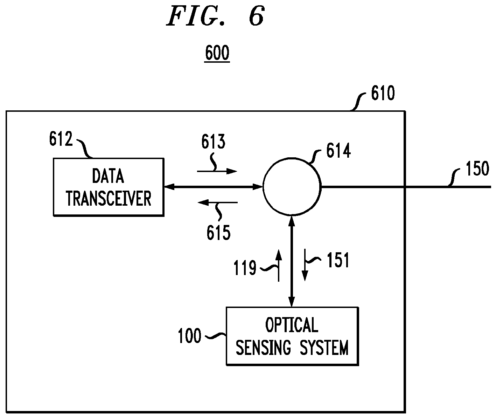

FIG. 6 is a block diagram of a portion of a communications network 600 comprising a communications node 610 connected to a fiber-optic communication link having an instance of the optical fiber 150 of FIG. 1. As shown in FIG. 6, the communications node 610 includes a data transceiver 612, an instance of the optical sensing system 100 of FIG. 1, and an optical coupler/decoupler 614. During payload-data operations, the data transceiver 612 generates an outgoing optical data signal 613 that is injected into the communication link via the coupler/decoupler 614 and receives an incoming optical data signal 615 from the communication link via the coupler/decoupler 614. During monitoring operations, the optical sensing system 100 performs multi-resolution fiber monitoring as described above to inject modulated optical signals into the communication link and receive corresponding reflected signals in order to monitor the optical fiber 150 for fiber events. Note that the optical circulator 130 of FIG. 1 is part of the coupler/decoupler 614 of FIG. 6. Depending on the embodiment, the payload-data operations and the monitoring operations can be performed either independently or concurrently. In some embodiments, the data transceiver 612 and the optical sensing system 100 can be configured to use different respective carrier wavelengths. In some other embodiments, inband monitoring, in which the data transceiver 612 and the optical sensing system 100 are configured to use the same carrier wavelength may also be possible, e.g., using a suitable time-division protocol.

Although described in the context of a communications system, the multi-resolution fiber monitoring of the present invention can be implemented for many other applications. For example, the optical sensing system 100 and the optical fiber 150 of FIG. 1 could be used as a sensor designed to detect external events that produce fiber events in the optical fiber 150, such as earthquakes, passing trains, car/pedestrian traffic, intrusions in sensitive areas, etc. The optical sensing system 100 and the optical fiber 150 could also be used to as a sensor to detect the presence of certain chemicals that impact the phases of the reflected optical signals. Such chemical events may result in a single temporal phase change rather than multiple phase changes over time. In that case, such fiber events can be detected by thresholding the temporal phase change rather than thresholding variance.

Although embodiments have been described, in which the optical fiber 150 has intrinsic Rayleigh backscatterers, in other embodiments, the optical fiber 150 may have extrinsic reflectors, such as micro-mirrors or fiber Bragg gratings, that are purposefully incorporated into the optical fiber 150 at specific, known locations that might or might not be at fixed spatial intervals. In that case, the different subsets of selected locations used to monitor the optical fiber 150 for fiber events can be generated by the controller 140 based on the known locations of the extrinsic reflectors and desired levels of spatial resolution. For example, if a 100km optical fiber had $10^5$ evenly spaced extrinsic reflectors having a spatial resolution of 1 m, the initial subset of locations could include $10^3$ evenly spaced reflectors having a spatial resolution of 100 m. When a fiber event is detected at one of those reflectors, nine additional reflectors having a spatial resolution of 10 m can be added immediately upstream of the detecting reflector. When the accuracy (with which the location of that detected fiber event is determined) is improved, another nine additional reflectors having a spatial resolution of 1 m can be added immediately upstream of the updated detecting reflector in order to make a final determination of the location for the detected fiber event. Note that, when the second nine reflectors are added to the subset, those reflectors in the first nine that are no longer needed to improve the accuracy of locating the detected fiber event can be removed from the subset of selected locations.

Embodiments have been described that employ a polarization-multiplexed probing sequence and a dual-polarization coherent optical receiver 120 having a dual-polarization 90-degree hybrid coherent mixer 122 that generates eight optical component signals 123 and an O-to-E converter 124 that generates four digital signals 125. Alternative embodiments can employ (i) a single polarization probing sequence and a coherent optical receiver having a single-polarization 90-degree hybrid coherent mixer that generates four optical component signals and (ii) an O-to-E converter that generates only two digital signals. In that case, the digital processor 126 would be able to generate only scalar complex results, instead of full Jones matrices, from which a noisier (e.g., due to polarization fading in Rayleigh backscattered signals) phase estimate could be extracted.

Although embodiments have been described that detect fiber events based on differential phase data, in alternative embodiments, fiber events can be detected based on state of polarization (SOP) data. For example, the controller 140 can be configured to monitor the SOP data for temporal variations that indicate the occurrence of fiber events. [SOP data is estimated from the full Jones matrix. SOP is commonly represented as a Stokes vector (a set of 4 values describing the polarization state of an electromagnetic field). The impact that a Jones matrix $H$ has on a Stokes vector can be given by computing the 4x4 Mueller matrix $M$ as $M = A(H \otimes H^*)A^{-1}$ where $\otimes$ is the

tensor Kronecker product and $A = \begin{bmatrix} 1 & 0 & 0 & 1 \\ 1 & 0 & 0 & -1 \\ 0 & 1 & 1 & 0 \\ 0 & -i & i & 0 \end{bmatrix}$.

According to an example embodiment disclosed above in reference to FIGs. 1-6, provided is an apparatus (e.g., 100, FIG. 1) comprising an optical transmitter (e.g., 110, FIG. 1), an optical receiver (e.g., 120, FIG. 1), and an electronic controller (e.g., 140, FIG. 1). The optical transmitter is configured to generate and inject a modulated optical signal (e.g., 119, FIG. 1) into an optical fiber (e.g., 150, FIG. 1) having a plurality of optical reflectors (e.g., $S_n$, FIG. 1) distributed along the optical fiber. The optical receiver is configured to receive and process a reflected optical signal (e.g., 151, FIG. 1) corresponding to reflections of the modulated optical signal from the optical reflectors to generate monitoring data (e.g., 129, FIG. 1) corresponding to one or more selected locations (e.g., 141, FIG. 1) along the optical fiber, the one or more selected locations corresponding to one or more of the optical reflectors. The electronic controller is configured to (i) determine the selected locations for the optical receiver and (ii) process the monitoring data to detect at least a first fiber event in the optical fiber at a detected location, wherein the electronic controller is further configured to change the selected locations for the optical receiver in response to at least the first fiber event.

In some embodiments of the above apparatus, the electronic controller is configured to change the selected locations in a manner that increases average spatial resolution of the monitoring data.

In some embodiments of the above apparatus, the electronic controller is configured to continue to monitor the optical fiber to detect one or more additional fiber events including an additional fiber event that is concurrent with the first fiber event.

In some embodiments of some of the above apparatuses, the electronic controller is further configured to change the selected locations one or more additional times in a manner that increases average spatial resolution of the monitoring data corresponding to the first fiber event.

In some embodiments of any of the above apparatuses, the monitoring data comprise differential phase data corresponding to phase differences between adjacent selected locations; and the electronic controller is configured to detect the first fiber event at the detected location in response to presence of differential phase data whose temporal variation exceeds a specified threshold level.

In some embodiments of any of the above apparatuses, the monitoring data comprise intensity data, and the electronic controller is configured to determine the selected locations based on the intensity data.

In some embodiments of the above apparatus, the electronic controller is configured to generate an initial subset of selected locations by identifying optical reflectors having intensity values greater than a first intensity threshold level and generate newly selected locations by identifying optical reflectors near the detected location for the first fiber event having intensity values greater than a second intensity threshold level that is lower than the first intensity threshold level.

In some embodiments of the above apparatus, the electronic controller is configured to adaptively change at least one of (i) the first intensity threshold level in generating the initial subset of selected locations and (ii) the second intensity threshold level in generating the newly selected locations.

In some embodiments of some of the above apparatuses, the newly selected locations are located between the detected location and a previous selected location upstream of the detected location.

In some embodiments of any of the above apparatuses, the optical reflectors comprise one or more Bragg backscatterers.

In the invention, the optical transmitter comprises a laser source (e.g., 112, FIG. 1) configured to generate a laser signal (e.g., 113, FIG. 1); an optical coupler (e.g., 114, FIG. 1) configured to tap off a tapped portion (e.g., 115a, FIG. 1) of the laser signal for forwarding to the optical receiver (e.g., 120, FIG. 1); a code generator (e.g., 116, FIG. 1) configured to generate a binary code sequence (e.g., 117, FIG. 1); and a modulator (e.g., 118, FIG. 1) configured to modulate another portion (e.g., 115b, FIG. 1) of the laser signal based on the binary code sequence to generate the modulated optical signal (e.g., 119, FIG. 1). The optical receiver comprises an optical mixer (e.g., 122, FIG. 1) configured to mix the tapped portion of the laser signal with the reflected signal (e.g., 151, FIG. 1) to generate component optical signals (e.g., 123, FIG. 1); an optical-to-electrical converter (e.g., 124, FIG. 1) configured to generate digital electrical signals (e.g., 125, FIG. 1) from the component optical signals; and a digital processor (e.g., 126, FIG. 1) configured to generate the monitoring data (e.g., 129, FIG. 1) for the selected locations (e.g., 141, FIG. 1) from the digital electrical signals.

In some embodiments of any of the above apparatuses, the apparatus further comprises a communications node (e.g., 610, FIG. 6) of a communications network, wherein the communications network comprises the optical fiber.

According to another example embodiment disclosed above in reference to FIGs. 1-6, provided is a method comprising providing an apparatus (e.g., 100, FIG. 1), wherein the apparatus comprises an optical transmitter (e.g., 110, FIG. 1), an optical receiver (e.g., 120, FIG. 1), and an electronic controller (e.g., 140, FIG. 1). The optical transmitter generates and injects a modulated optical signal (e.g., 119, FIG. 1) into an optical fiber (e.g., 150, FIG. 1) having a plurality of optical reflectors (e.g., $S_n$, FIG. 1) distributed along the length of the optical fiber. The optical receiver receives and processes a reflected optical signal (e.g., 151, FIG. 1) corresponding to reflections of the modulated optical signal from the optical reflectors to generate monitoring data (e.g., 129, FIG. 1) corresponding to one or more selected locations (e.g., 141, FIG. 1) along the optical fiber corresponding to one or more optical reflectors. The electronic controller (i) determines the selected locations for the optical receiver and (ii) processes the monitoring data to detect at least one fiber event in the optical fiber at a detected location.

In some embodiments of the above method, the method further comprises the electronic controller generating an initial subset of selected locations; the receiver generating monitoring data (119) corresponding to the initial subset; the electronic controller detecting a first fiber event at a detected location based on the monitoring data for the initial subset; the electronic controller generating an updated subset of selected locations based on the detected location; the receiver generating monitoring data corresponding to the updated subset; and the electronic controller updating the detected location for the first fiber event based on the monitoring data for the updated subset.

In some embodiments of the above method, the electronic controller generates the updated subset of the selected locations in a manner that increases average spatial resolution of the monitoring data.

In some embodiments of any one of the above methods, the electronic controller continues to monitor the optical fiber to detect one or more additional fiber events including an additional fiber event that is concurrent with the first fiber event.

In some embodiments of any one of the above methods, the electronic controller changes the selected locations one or more additional times in a manner that increases average spatial resolution of the monitoring data corresponding to the first fiber event.

In some embodiments of any one of the above methods, the monitoring data comprise differential phase data corresponding to phase differences between adjacent selected locations, and the electronic controller detects the first fiber event at the detected location in response to presence of differential phase data whose temporal variation exceeds a specified threshold level.

In some embodiments of any one of the above methods, the monitoring data comprise intensity data, and the electronic controller determines the selected locations based on the intensity data.

In some embodiments of the above method, the electronic controller generates an initial subset of selected locations by identifying optical reflectors having intensity values greater than a first intensity threshold level and generates newly selected locations by identifying optical reflectors near the detected location for the first fiber event having intensity values greater than a second intensity threshold level that is lower than the first intensity threshold level.

Unless explicitly stated otherwise, each numerical value and range should be interpreted as being approximate as if the word "about" or "approximately" preceded the value or range.

It will be further understood that various changes in the details, materials, and arrangements of the parts which have been described and illustrated in order to explain the nature of this disclosure may be made by those skilled in the art without departing from the scope of the disclosure, e.g., as expressed in the following claims.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the disclosure. The appearances of the phrase "in one embodiment" in various places in the specification are not necessarily all referring to the same embodiment, nor are separate or alternative embodiments necessarily mutually exclusive of other embodiments. The same applies to the term "implementation."

Also for purposes of this description, the terms "couple," "coupling," "coupled," "connect," "connecting," or "connected" refer to any manner known in the art or later developed in which energy is allowed to be transferred between two or more elements, and the interposition of one or more additional elements is contemplated, although not required. Conversely, the terms "directly coupled," "directly connected," etc., imply the absence of such additional elements.

The described embodiments are to be considered in all respects as only illustrative and not restrictive. In particular, the scope of the disclosure is indicated by the appended claims rather than by the description and figures herein. All changes that come within the meaning and range of equivalency of the claims are to be embraced within their scope.

A person of ordinary skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The functions of the various elements shown in the figures, including any functional blocks labeled as "processors" and/or "controllers," may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In this specification including any claims, the term "each" may be used to refer to one or more specified characteristics of a plurality of previously recited elements or steps. When used with the open-ended term "comprising," the recitation of the term "each" does not exclude additional, unrecited elements or steps. Thus, it will be understood that an apparatus may have additional, unrecited elements and a method may have additional, unrecited steps, where the additional, unrecited elements or steps do not have the one or more specified characteristics.

The use of figure numbers and/or figure reference labels in the claims is intended to identify one or more possible embodiments of the claimed subject matter in order to facilitate the interpretation of the claims. Such use is not to be construed as necessarily limiting the scope of those claims to the embodiments shown in the corresponding figures.

As used in this application, the term "circuitry" may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware and (ii) any portions of hardware processor(s) with software (including digital signal processor(s)), software, and memory(ies) that work together to cause an apparatus, such as a mobile phone or server, to perform various functions); and (c) hardware circuit(s) and or processor(s), such as a microprocessor(s) or a portion of a microprocessor(s), that requires software (e.g., firmware) for operation, but the software may not be present when it is not needed for operation." This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

It should be appreciated by those of ordinary skill in the art that any block diagrams herein represent conceptual views of illustrative circuitry embodying the principles of the disclosure. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

As used herein and in the claims, the term "provide" with respect to an apparatus or with respect to a system, device, or component encompasses designing or fabricating the apparatus, system, device, or component; causing the apparatus, system, device, or component to be designed or fabricated; and/or obtaining the apparatus, system, device, or component by purchase, lease, rental, or other contractual arrangement.

Unless otherwise specified herein, the use of the ordinal adjectives "first," "second," "third," etc., to refer to an object of a plurality of like objects merely indicates that different instances of such like objects are being referred to, and is not intended to imply that the like objects so referred-to have to be in a corresponding order or sequence, either temporally, spatially, in ranking, or in any other manner.

## Claims

1. An apparatus (100) comprising:
an optical transmitter (110) configured to generate and inject a modulated optical signal (119) into an optical fiber (150) having a plurality of optical reflectors ($S_n$) distributed along the optical fiber, the optical transmitter comprising:

   a laser source (112),
   an optical coupler (114),
   a code generator (116), and
   a modulator (118) configured to modulate a portion of an optical signal whereby to generate the modulated optical signal (119), the optical signal modulated on the basis of a binary code sequence (117) generated by the code generator (116) and comprising a code, the code modulated onto each of the horizontal and vertical polarization components of a portion (115b) of a polarized laser signal (113) generated by the laser source (112),
   a dual-polarization coherent optical receiver (120) configured to receive and process a reflected optical signal (151) corresponding to reflections of the modulated optical signal from the optical reflectors to generate monitoring data (129) corresponding to one or more selected locations (141) along the optical fiber, the one or more selected locations corresponding to one or more of the optical reflectors; and
   an electronic controller (140) configured to (i) determine the selected locations for the optical receiver and (ii) process the monitoring data to detect at least a first fiber event in the optical fiber at a detected location, wherein the electronic controller is further configured to change the selected locations for the optical receiver in response to at least the first fiber event.

2. The apparatus of claim 1, wherein the electronic controller is configured to change the selected locations in a manner that increases average spatial resolution of the monitoring data.

3. The apparatus of claim 2, wherein the electronic controller is configured to continue to monitor the optical fiber to detect one or more additional fiber events including an additional fiber event that is concurrent with the first fiber event.

4. The apparatus of any one of claims 2-3, wherein the electronic controller is further configured to change the selected locations one or more additional times in a manner that increases average spatial resolution of the monitoring data corresponding to the first fiber event.

**5.** The apparatus of any one of claims 1-4, wherein:

the monitoring data comprise differential phase data corresponding to phase differences between adjacent selected locations; and the electronic controller is configured to detect the first fiber event at the detected location in response to presence of differential phase data whose temporal variation exceeds a specified threshold level.

**6.** The apparatus of any one of claims 1-5, wherein:

the monitoring data comprise intensity data; and the electronic controller is configured to determine the selected locations based on the intensity data.

**7.** The apparatus of claim 6, wherein the electronic controller is configured to:

generate an initial subset of selected locations by identifying optical reflectors having intensity values greater than a first intensity threshold level; and generate newly selected locations by identifying optical reflectors near the detected location for the first fiber event having intensity values greater than a second intensity threshold level that is lower than the first intensity threshold level.

**8.** The apparatus of claim 7, wherein the electronic controller is configured to adaptively change at least one of (i) the first intensity threshold level in generating the initial subset of selected locations and (ii) the second intensity threshold level in generating the newly selected locations.

**9.** The apparatus of any one of claims 7-8, wherein the newly selected locations are located between the detected location and a previous selected location upstream of the detected location.

**10.** The apparatus of any one of claims 1-9, wherein the optical reflectors comprise one or more Bragg backscatterers.

**11.** The apparatus of any one of claims 1-10, wherein: the optical receiver (120) comprises:

an optical mixer (122) configured to mix the tapped portion (115a) of the laser signal with the reflected signal (151) to generate component optical signals (123); an optical-to-electrical converter (124) configured to generate digital electrical signals (125) from the component optical signals (123); and a digital processor (126) configured to generate the monitoring data (127, 129) for the selected locations (141) using the digital electrical signals (125).

**12.** The apparatus of any one of claims 1-11, further comprising a communications node (610) of a communications network, wherein the communications network comprises the optical fiber.

**13.** A method, comprising:

generating, using a code generator (116), a code comprising a binary code sequence (117); modulating, using the code, horizontal and vertical polarization components of a portion (115b) of a polarized laser signal (113) generated by a laser source (112), whereby to generate a modulated optical signal (119); injecting the modulated optical signal (119) into an optical fiber (150) having a plurality of optical reflectors ($S_n$) distributed along the length of the optical fiber; receiving, using a dual-polarization coherent optical receiver (120), a reflected optical signal (151) corresponding to reflections of the modulated optical signal from the optical reflectors; processing the reflected optical signal (151) to generate monitoring data (129) corresponding to one or more selected locations (141) along the optical fiber corresponding to one or more optical reflectors; determining, using an electronic controller, the selected locations for the optical receiver; and processing the monitoring data (129) to detect at least one fiber event in the optical fiber at a detected location.

**14.** The method of claim 13, further comprising:

the electronic controller generating an initial subset of selected locations; the receiver generating monitoring data (119) corresponding to the initial subset; the electronic controller detecting a first fiber event at a detected location based on the monitoring data for the initial subset; the electronic controller generating an updated subset of selected locations based on the detected location; the receiver generating monitoring data corresponding to the updated subset; and the electronic controller updating the detected location for the first fiber event based on the monitoring data for the updated subset.

**15.** The method of claim 14, further comprising: generating the updated subset of the selected locations using the electronic controller in a manner that increases average spatial resolution of the monitoring data.

16. The method of any one of claims 13-15, further comprising:
monitoring the optical fiber to detect one or more additional fiber events including an additional fiber event that is concurrent with the first fiber event using the electronic controller.

17. The method of any one of claims 13-16, further comprising:
changing the selected locations in a manner that increases average spatial resolution of the monitoring data corresponding to the first fiber event using the electronic controller.

18. The method of any one of claims 13-17, wherein:
the monitoring data comprises differential phase data corresponding to phase differences between adjacent selected locations; and further comprising:
detecting, using the electronic controller, the first fiber event at the detected location in response to presence of differential phase data whose temporal variation exceeds a specified threshold level.

19. The method of any one of claims 13-18, wherein:
the monitoring data comprise intensity data; and the method further comprises:
determining, using the electronic controller, the selected locations based on the intensity data.

20. The method of claim 19, further comprising:

generating, using the electronic controller, an initial subset of the selected locations by identifying optical reflectors having intensity values greater than a first intensity threshold level; and generating newly selected locations by identifying optical reflectors near the detected location for the first fiber event having intensity values greater than a second intensity threshold level that is lower than the first intensity threshold level.

**Patentansprüche**

1. Vorrichtung (100), die Folgendes umfasst:
einen optischen Sender (110), der dazu ausgelegt ist, ein moduliertes optisches Signal (119) zu erzeugen und in einen Lichtleiter (150) zu injizieren, der eine Vielzahl von optischen Reflektoren ($S_n$) aufweist, die entlang des Lichtleiters verteilt sind, wobei der optische Sender Folgendes umfasst:

eine Laserquelle (112),
einen Optokoppler (114),

einen Codegenerator (116), und
einen Modulator (118), der dazu ausgelegt ist, einen Abschnitt eines optischen Signals zu modulieren, wodurch das modulierte optische Signal (119) erzeugt wird, wobei das optische Signal auf Basis einer binären Codesequenz (117) moduliert wird, die vom Codegenerator (116) erzeugt wird und einen Code umfasst, wobei der Code auf jede der horizontalen und der vertikalen Polarisationskomponenten eines Abschnitts (115b) eines polarisierten Lasersignals (113) moduliert wird, das von der Laserquelle (112) erzeugt wird,
einen kohärenten optischen Empfänger (120) mit zwei Polarisationen, der dazu ausgelegt ist, ein reflektiertes optisches Signal (151), das Reflexionen des modulierten optischen Signals von den optischen Reflektoren entspricht, zu empfangen und zu verarbeiten, um Überwachungsdaten (129) zu erzeugen, die einer oder mehreren ausgewählten Stellen (141) entlang des Lichtleiters entsprechen, wobei die eine oder die mehreren ausgewählten Stellen einem oder mehreren der optischen Reflektoren entsprechen; und
eine elektronische Steuerung (140), die dazu ausgelegt ist, (i) die ausgewählten Stellen für den optischen Empfänger zu bestimmen und (ii) die Überwachungsdaten zu verarbeiten, um an einer detektierten Stelle mindestens ein erstes Faserereignis im Lichtleiter zu detektieren, wobei die elektronische Steuerung ferner dazu ausgelegt ist, die ausgewählten Stellen für den optischen Empfänger in Reaktion auf mindestens das erste Faserereignis zu ändern.

2. Vorrichtung nach Anspruch 1, wobei die elektronische Steuerung dazu ausgelegt ist, die ausgewählten Stellen in einer Weise zu ändern, die die durchschnittliche räumliche Auflösung der Überwachungsdaten erhöht.

3. Vorrichtung nach Anspruch 2, wobei die elektronische Steuerung dazu ausgelegt ist, die Überwachung des Lichtleiters fortzusetzen, um ein oder mehrere zusätzliche Faserereignisse zu detektieren, die ein zusätzliches Faserereignis beinhalten, das mit dem ersten Faserereignis gleichzeitig auftritt.

4. Vorrichtung nach einem der Ansprüche 2 bis 3, wobei die elektronische Steuerung ferner dazu ausgelegt ist, die ausgewählten Stellen ein oder mehrere zusätzliche Male in einer Weise zu ändern, die eine durchschnittliche räumliche Auflösung der Überwachungsdaten erhöht, die dem ersten Faserereignis entsprechen.

**5.** Vorrichtung nach einem der Ansprüche 1 bis 4, wobei:

die Überwachungsdaten Differenzphasendaten umfassen, die Phasendifferenzen zwischen benachbarten ausgewählten Stellen entsprechen; und
die elektronische Steuerung dazu ausgelegt ist, das erste Faserereignis in Reaktion auf das Vorhandensein von Differenzphasendaten, deren zeitliche Variation einen spezifizierten Schwellwertpegel überschreitet, an der detektierten Stelle zu detektieren.

**6.** Vorrichtung nach einem der Ansprüche 1 bis 5, wobei:

die Überwachungsdaten Intensitätsdaten umfassen; und
die elektronische Steuerung dazu ausgelegt ist, die ausgewählten Stellen auf Basis der Intensitätsdaten zu bestimmen.

**7.** Vorrichtung nach Anspruch 6, wobei die elektronische Steuerung zu Folgendem ausgelegt ist:

Erzeugen eines anfänglichen Untersatzes von ausgewählten Stellen durch Identifizieren von optischen Reflektoren mit Intensitätswerten, die größer sind als ein erster Intensitätsschwellwertpegel; und
Erzeugen von neu ausgewählten Stellen durch Identifizieren von optischen Reflektoren in der Nähe der detektierten Stelle für das erste Faserereignis mit Intensitätswerten, die größer sind als ein zweiter Intensitätsschwellwertpegel, der niedriger ist als der erste Intensitätsschwellwertpegel.

**8.** Vorrichtung nach Anspruch 7, wobei die elektronische Steuerung dazu ausgelegt ist, mindestens einen vom (i) ersten Intensitätsschwellwertpegel beim Erzeugen des anfänglichen Untersatzes von ausgewählten Stellen und vom (ii) zweiten Intensitätsschwellwertpegel beim Erzeugen der neu ausgewählten Stellen adaptiv zu ändern.

**9.** Vorrichtung nach einem der Ansprüche 7 bis 8, wobei sich die neu ausgewählten Stellen zwischen der detektierten Stelle und einer zuvor ausgewählten Stelle stromaufwärts von der detektierten Stelle befinden.

**10.** Vorrichtung nach einem der Ansprüche 1 bis 9, wobei die optischen Reflektoren einen oder mehrere Bragg-Backscatterer umfassen.

**11.** Vorrichtung nach einem der Ansprüche 1 bis 10, wobei:
der optische Empfänger (120) Folgendes umfasst:

einen optischen Mischer (122), der dazu ausgelegt ist, den abgegriffenen Abschnitt (115a) des Lasersignals mit dem reflektierten Signal (151) zu mischen, um optische Komponentensignale (123) zu erzeugen;
einen Optisch-Elektrisch-Wandler (124), der dazu ausgelegt ist, aus den optischen Komponentensignalen (123) digitale elektrische Signale (125) zu erzeugen; und
einen digitalen Prozessor (126), der dazu ausgelegt ist, die Überwachungsdaten (127, 129) für die ausgewählten Stellen (141) unter Verwendung der digitalen elektrischen Signale (125) zu erzeugen.

**12.** Vorrichtung nach einem der Ansprüche 1 bis 11, die ferner einen Kommunikationsknoten (610) eines Kommunikationsnetzwerks umfasst, wobei das Kommunikationsnetzwerk den Lichtleiter umfasst.

**13.** Verfahren, das Folgendes umfasst:

Erzeugen eines Codes, der eine binäre Codesequenz (117) umfasst, unter Verwendung eines Codegenerators (116);
Modulieren von horizontalen und vertikalen Polarisationskomponenten eines Abschnitts (115b) eines polarisierten Lasersignals (113), das von einer Laserquelle (112) erzeugt wird, unter Verwendung des Codes, wodurch ein moduliertes optisches Signal (119) erzeugt wird;
Injizieren des modulierten optischen Signals (119) in einen Lichtleiter (150) mit einer Vielzahl von optischen Reflektoren ($S_n$), die entlang der Länge des Lichtleiters verteilt sind;
Empfangen eines reflektierten optischen Signals (151), das Reflexionen des modulierten optischen Signals von den optischen Reflektoren entspricht, unter Verwendung eines kohärenten optischen Empfängers (120) mit zwei Polarisationen;
Verarbeiten des reflektierten optischen Signals (151), um Überwachungsdaten (129) zu erzeugen, die einer oder mehreren ausgewählten Stellen (141) entlang des Lichtleiters entsprechen, die einem oder mehreren optischen Reflektoren entsprechen,;
Bestimmen der ausgewählten Stellen für den optischen Empfänger unter Verwendung einer elektronischen Steuerung; und
Verarbeiten der Überwachungsdaten (129), um an einer detektierten Stelle mindestens ein Faserereignis im Lichtleiter zu detektieren.

**14.** Verfahren nach Anspruch 13, das ferner Folgendes umfasst:

Erzeugen eines anfänglichen Untersatzes von ausgewählten Stellen durch die elektronische Steuerung;

Erzeugen von Überwachungsdaten (119), die dem anfänglichen Untersatz entsprechen, durch den Empfänger;

Detektieren eines ersten Faserereignisses an einer detektierten Stelle auf Basis der Überwachungsdaten für den ersten Untersatz durch die elektronische Steuerung;

Erzeugen eines aktualisierten Untersatzes von ausgewählten Stellen auf Basis der detektierten Stelle durch die elektronische Steuerung;

Erzeugen von Überwachungsdaten, die dem aktualisierten Untersatz entsprechen, durch den Empfänger; und

Aktualisieren der detektierten Stelle für das erste Faserereignis durch die elektronische Steuerung auf Basis der Überwachungsdaten für den aktualisierten Untersatz.

15. Verfahren nach Anspruch 14, das ferner Folgendes umfasst:
Erzeugen des aktualisierten Untersatzes der ausgewählten Stellen unter Verwendung der elektronischen Steuerung in einer Weise, die die durchschnittliche räumliche Auflösung der Überwachungsdaten erhöht.

16. Verfahren nach einem der Ansprüche 13 bis 15, das ferner Folgendes umfasst:
Überwachen des Lichtleiters durch die elektronische Steuerung, um ein oder mehrere zusätzliche Faserereignisse zu detektieren, die ein zusätzliches Faserereignis beinhalten, das mit dem ersten Faserereignis gleichzeitig auftritt.

17. Verfahren nach einem der Ansprüche 13 bis 16, das ferner Folgendes umfasst:
Ändern der ausgewählten Stellen in einer Weise, die eine durchschnittliche räumliche Auflösung der Überwachungsdaten erhöht, die dem ersten Faserereignis entsprechen, unter Verwendung der elektronischen Steuerung.

18. Verfahren nach einem der Ansprüche 13 bis 17, wobei:
die Überwachungsdaten Differenzphasendaten umfassen, die Phasendifferenzen zwischen benachbarten ausgewählten Stellen entsprechen; und das ferner Folgendes umfasst:
Detektieren des ersten Faserereignisses unter Verwendung der elektronischen Steuerung in Reaktion auf das Vorhandensein von Differenzphasendaten, deren zeitliche Variation einen spezifizierten Schwellwertpegel überschreitet, an der detektierten Stelle.

19. Verfahren nach einem der Ansprüche 13 bis 18, wobei:
die Überwachungsdaten Intensitätsdaten umfassen; und das Verfahren ferner Folgendes umfasst:
Bestimmen der ausgewählten Stellen unter Verwendung der elektronischen Steuerung auf Basis der Intensitätsdaten.

20. Verfahren nach Anspruch 19, das ferner Folgendes umfasst:

Erzeugen eines anfänglichen Untersatzes der ausgewählten Stellen unter Verwendung der elektronischen Steuerung durch Identifizieren von optischen Reflektoren mit Intensitätswerten, die größer sind als ein erster Intensitätsschwellwertpegel; und

Erzeugen von neu ausgewählten Stellen durch Identifizieren von optischen Reflektoren in der Nähe der detektierten Stelle für das erste Faserereignis mit Intensitätswerten, die größer sind als ein zweiter Intensitätsschwellwertpegel, der niedriger ist als der erste Intensitätsschwellwertpegel.

**Revendications**

1. Appareil (100) comprenant :
un émetteur optique (110) configuré pour générer et injecter un signal optique modulé (119) dans une fibre optique (150) ayant une pluralité de réflecteurs optiques ($S_n$) répartis le long de la fibre optique, l'émetteur optique comprenant :

une source laser (112),
un coupleur optique (114),
un générateur de code (116), et
un modulateur (118) configuré pour moduler une partie d'un signal optique afin de générer le signal optique modulé (119), le signal optique étant modulé sur la base d'une séquence de code binaire (117) générée par le générateur de code (116) et comprenant un code, le code étant modulé sur chacune des composantes de polarisation horizontale et verticale d'une partie (115b) d'un signal laser polarisé (113) généré par la source laser (112),
un récepteur optique cohérent à double polarisation (120) configuré pour recevoir et traiter un signal optique réfléchi (151) correspondant aux réflexions du signal optique modulé des réflecteurs optiques, pour générer des données de surveillance (129) correspondant à un ou plusieurs emplacements sélectionnés (141) le long de la fibre optique, les un ou plusieurs emplacements sélectionnés correspondant à un ou plusieurs des réflecteurs optiques ; et

un dispositif de commande électronique (140) configuré pour (i) déterminer les emplacements sélectionnés pour le récepteur optique et (ii) traiter les données de surveillance pour détecter au moins un premier événement de fibre dans la fibre optique à un emplacement détecté, dans lequel le dispositif de commande électronique est en outre configuré pour modifier les emplacements sélectionnés pour le récepteur optique en réponse à au moins le premier événement de fibre.

2. Appareil selon la revendication 1, dans lequel le dispositif de commande électronique est configuré pour modifier les emplacements sélectionnés de manière à augmenter la résolution spatiale moyenne des données de surveillance.

3. Appareil selon la revendication 2, dans lequel le dispositif de commande électronique est configuré pour continuer à surveiller la fibre optique pour détecter un ou plusieurs événements de fibre supplémentaires comportant un événement de fibre supplémentaire qui est simultané au premier événement de fibre.

4. Appareil selon l'une des revendications 2 à 3, dans lequel le dispositif de commande électronique est en outre configuré pour modifier les emplacements sélectionnés une ou plusieurs fois supplémentaires de manière à augmenter la résolution spatiale moyenne des données de surveillance correspondant au premier événement de fibre.

5. Appareil selon l'une des revendications 1 à 4, dans lequel :

les données de surveillance comprennent des données de phase différentielle correspondant à des différences de phase entre des emplacements sélectionnés adjacents ; et
le dispositif de commande électronique est configuré pour détecter le premier événement de fibre à l'emplacement détecté en réponse à la présence de données de phase différentielle dont la variation temporelle dépasse un niveau de seuil spécifié.

6. Appareil selon l'une des revendications 1 à 5, dans lequel :

les données de surveillance comprennent des données d'intensité ; et
le dispositif de commande électronique est configuré pour déterminer les emplacements sélectionnés sur la base des données d'intensité.

7. Appareil selon la revendication 6, dans lequel le dispositif de commande électronique est configuré pour :

générer un sous-ensemble initial d'emplacements sélectionnés en identifiant les réflecteurs optiques dont les valeurs d'intensité sont supérieures à un premier niveau de seuil d'intensité ; et
générer des emplacements nouvellement sélectionnés en identifiant les réflecteurs optiques proches de l'emplacement détecté pour le premier événement de fibre dont les valeurs d'intensité sont supérieures à un deuxième niveau de seuil d'intensité qui est inférieur au premier niveau de seuil d'intensité.

8. Appareil selon la revendication 7, dans lequel le dispositif de commande électronique est configuré pour modifier de manière adaptative au moins l'un parmi (i) le premier niveau de seuil d'intensité lors de la génération du sous-ensemble initial d'emplacements sélectionnés et (ii) le deuxième niveau de seuil d'intensité lors de la génération des emplacements nouvellement sélectionnés.

9. Appareil selon l'une des revendications 7 à 8, dans lequel les emplacements nouvellement sélectionnés sont situés entre l'emplacement détecté et un emplacement sélectionné précédent en amont de l'emplacement détecté.

10. Appareil selon l'une des revendications 1 à 9, dans lequel les réflecteurs optiques comprennent un ou plusieurs dispositifs de rétrodiffusion de Bragg.

11. Appareil selon l'une des revendications 1 à 10, dans lequel :
le récepteur optique (120) comprend :

un mélangeur optique (122) configuré pour mélanger la partie captée (115a) du signal laser avec le signal réfléchi (151) pour générer des signaux optiques de composante (123) ;
un convertisseur optique-électrique (124) configuré pour générer des signaux électriques numériques (125) à partir des signaux optiques de composante (123) ; et
un processeur numérique (126) configuré pour générer les données de surveillance (127, 129) pour les emplacements sélectionnés (141) à l'aide des signaux électriques numériques (125).

12. Appareil selon l'une des revendications 1 à 11, comprenant en outre un nœud de communication (610) d'un réseau de communication, dans lequel le réseau de communication comprend la fibre optique.

**13.** Procédé, comprenant :

à l'aide d'un générateur de code (116), la génération d'un code comprenant une séquence de code binaire (117) ;
à l'aide du code, la modulation de composantes de polarisation horizontale et verticale d'une partie (115b) d'un signal laser polarisé (113) généré par une source laser (112), afin de générer un signal optique modulé (119) ;
l'injection du signal optique modulé (119) dans une fibre optique (150) ayant une pluralité de réflecteurs optiques ($S_n$) répartis sur la longueur de la fibre optique ;
à l'aide d'un récepteur optique cohérent à double polarisation (120), la réception d'un signal optique réfléchi (151) correspondant aux réflexions du signal optique modulé des réflecteurs optiques ;
le traitement du signal optique réfléchi (151) pour générer des données de surveillance (129) correspondant à un ou plusieurs emplacements sélectionnés (141) le long de la fibre optique correspondant à un ou plusieurs réflecteurs optiques ;
à l'aide d'un dispositif de commande électronique, la détermination des emplacements sélectionnés pour le récepteur optique ; et
le traitement les données de surveillance (129) pour détecter au moins un événement de fibre dans la fibre optique à un emplacement détecté.

**14.** Procédé selon la revendication 13, comprenant en outre les étapes suivantes :

le dispositif de commande électronique génère un sous-ensemble initial d'emplacements sélectionnés ;
le récepteur génère des données de surveillance (119) correspondant au sous-ensemble initial ;
le dispositif de commande électronique détecte un premier événement de fibre à un emplacement détecté sur la base des données de surveillance pour le sous-ensemble initial ;
le dispositif de commande électronique génère un sous-ensemble mis à jour d'emplacements sélectionnés sur la base de l'emplacement détecté ;
le récepteur génère des données de surveillance correspondant au sous-ensemble mis à jour ; et
le dispositif de commande électronique met à jour l'emplacement détecté pour le premier événement de fibre sur la base des données de surveillance pour le sous-ensemble mis à jour.

**15.** Procédé selon la revendication 14, comprenant en outre :
la génération du sous-ensemble mis à jour des emplacements sélectionnés à l'aide du dispositif de commande électronique de manière à augmenter la résolution spatiale moyenne des données de surveillance.

**16.** Procédé selon l'une des revendications 13 à 15, comprenant en outre :
la surveillance de la fibre optique pour détecter un ou plusieurs événements de fibre supplémentaires comportant un événement de fibre supplémentaire qui est simultané au premier événement de fibre à l'aide du dispositif de commande électronique.

**17.** Procédé selon l'une des revendications 13 à 16, comprenant en outre :
la modification des emplacements sélectionnés de manière à augmenter la résolution spatiale moyenne des données de surveillance correspondant au premier événement de fibre à l'aide du dispositif de commande électronique.

**18.** Procédé selon l'une des revendications 13 à 17, dans lequel :
les données de surveillance comprennent des données de phase différentielle correspondant à des différences de phase entre des emplacements sélectionnés adjacents ; et comprenant en outre :
à l'aide du dispositif de commande électronique, la détection du premier événement de fibre à l'emplacement détecté en réponse à la présence de données de phase différentielle dont la variation temporelle dépasse un niveau de seuil spécifié.

**19.** Procédé selon l'une des revendications 13 à 18, dans lequel :
les données de surveillance comprennent des données d'intensité ; et le procédé comprend en outre :
à l'aide du dispositif de commande électronique, la détermination des emplacements sélectionnés sur la base des données d'intensité.

**20.** Procédé selon la revendication 19, comprenant en outre :

à l'aide du dispositif de commande électronique, la génération d'un sous-ensemble initial des emplacements sélectionnés en identifiant les réflecteurs optiques dont les valeurs d'intensité sont supérieures à un premier niveau de seuil d'intensité ; et
la génération d'emplacements nouvellement sélectionnés en identifiant les réflecteurs optiques proches de l'emplacement détecté pour le premier événement de fibre dont les valeurs d'intensité sont supérieures à un deuxième niveau de seuil d'intensité qui est inférieur au premier niveau de seuil d'intensité.

*FIG. 1*

100

FIG. 2

FIG. 2

EP 3 595 195 B1

FIG. 3

## FIG. 4

CONTROLLER INSTRUCTS
DIGITAL PROCESSOR TO
GENERATE INTENSITY DATA
FOR ENTIRE OPTICAL FIBER — 402

CONTROLLER THRESHOLDS
INTENSITY DATA TO
GENERATE INITIAL SUBSET
OF SELECTED LOCATIONS — 404

CONTROLLER INSTRUCTS
DIGITAL PROCESSOR TO
GENERATE DIFFERENTIAL PHASE
DATA FOR CURRENT SUBSET
AND CONTROLLER TRACKS
DIFFERENTIAL PHASE DATA — 406

CONTROLLER DETECTS ONE
OR MORE FIBER EVENTS — 408

CONTROLLER UPDATES SUBSET
OF SELECTED LOCATIONS — 410

FIG. 5A    FIG. 5B    FIG. 5C    FIG. 5D

# FIG. 6

600

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XUANWEI MEI et al.** *Optics Express*, 24 January 2018, vol. 26 (3), 2659
- **YONAS MUANENDA**. Recent Advances in Distributed Acoustic Sensing Based on Phase-Sensitive Optical Time Domain Reflectometry. *Journal of Sensors*, 2018
- **C. DORIZE** ; **E. AWWAD**. Enhancing the performance of coherent OTDR systems with polarization diversity complementary codes. *Optics Express*, 2018, vol. 26 (10), 12878-12890